# EUROPEAN PATENT APPLICATION

(11) **EP 4 732 922 A1**
(43) Date of publication of application: **29.04.2026**
(21) Application number: 24306816.0
(22) Date of filing: 28.10.2024
(51) Int. Cl.: A63F 13/426, A63F 13/55, A63F 13/63, G06T 13/40

(54) **AVATARS/SCENE INTERACTIONS IN A MULTI-USER XR APPLICATION**

(71) Applicant: InterDigital CE Patent Holdings, SAS, 75017 Paris (FR)
(72) Inventor: LELIEVRE, Sylvain, 35760 MONTGERMONT (FR); JOUET, Pierrick, 35000 RENNES (FR); HIRTZLIN, Patrice, 35830 BETTON (FR); FAIVRE D'ARCIER, Etienne, 35750 SAINT GONLAY (FR); FONTAINE, Loic, 35530 NOYAL SUR VILAINE (FR)
(74) Representative: AWA Sweden AB

(57) **Abstract**

Methods, apparatus and data stream are provided for processing of triggers related to avatar interactions in a 3D scene, in particular pointing triggers. A scene description file is received. A user equipment or an application server parses the file and iterates on each described behavior. If triggers in the scene description are related to avatar interactions the device starts tracking the avatars and the events (expressions, gestures, gaze and/or pointing an object) referenced in these triggers. Each time an event occurs and is detected the device starts the one or more actions specified in the corresponding behavior.

## Description

### 1. Technical Field

The present principles generally relate to the domain of encoding transmitting and decoding for 3D scene description. In particular, the present principles relate to the encoding, transmitting and decoding of the components and the parameters required for virtual conferencing when multiple users meet in a virtual environment.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

In a virtual conferencing application, multiple users meet in a virtual environment and may be represented by virtual avatars. Herein, the term avatar is used for a virtual representation of a user, in any shape, style and format of this avatar (humanoid, animal, robot, ...). Managing interactions between avatars requires scripting the avatars movements and behaviors. Such scripts depend on the user equipment and may be decorrelated of some objects or events of the 3D scene according to the way they are programmed. There is a lack of a solution that allows to manage the interactions between avatars independently from scripts specific to a given user equipment and that links these interactions to the entire 3D scene. The present principles propose a solution in which a scene description that describes all the object that compose the virtual environment includes elements related to the interaction between the users and between their avatars. This method to manage interactions between avatars is based on dedicated semantics in a scene description file and comprises receiving and parsing a scene description file, identifying the elements of the scene that describe avatar interactions, tracking the avatars and the events that are referenced in the described interactions, and executing the appropriate actions when an event occurs.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Methods, apparatus and data stream are provided for processing of triggers related to avatar interactions in a 3D scene, in particular pointing triggers. A scene description file is received. A user equipment or an application server parses the file and iterates on each described behavior. If triggers in the scene description are related to avatar interactions the device starts tracking the avatars and the events (expressions, gestures, gaze and/or pointing an object) referenced in these triggers. Each time an event occurs and is detected the device starts the one or more actions specified in the corresponding behavior.

The present principles relate to a method for processing of triggers related to avatar interactions in a 3D scene. The method comprises obtaining a scene description comprising pointing triggers. Each pointing trigger comprises a list of types of pointers, a reference to an object of the 3D scene (that is, a node of the scene description), and a list of actions. The 3D scene is tracked to detect if avatars are pointing the object by using at least one pointer of the list of pointers. The corresponding pointing trigger is activated when an event is detected. Then, The list of actions of each activated trigger is applied to the 3D scene. In an embodiment, a pointing trigger comprises a list of second nodes of the scene description representative of a part of the avatars, and wherein the events are tracked for the part of the avatars only. It may also comprise a list of conditions indicating whether all, at least one or only one avatar has to point the object to activate the pointing trigger. In another embodiment, a pointing trigger comprises an information representative of a zone of the object to be pointed to activate the pointing trigger. In another embodiment, a pointing trigger comprises an information representative of an angle around a pointing direction to activate the pointing trigger. The embodiments may be combined.

The present principles also relate to a device comprising a memory associated with the processor that is configured to implement the above method according to any one of the embodiments described herein.

The present principles also relate to a data stream representative of triggers related to avatar interactions in a 3D scene, wherein the data stream comprises a scene description comprising pointing triggers, wherein each pointing trigger comprises a list of types of pointers, a reference to an object of the 3D scene (that is, a node of the scene description), and a list of actions. In an embodiment, a pointing trigger comprises a list of second nodes of the scene description representative of a part of the avatars. It may also comprise a list of conditions indicating whether all, at least one or only one avatar has to point the object to activate the pointing trigger. In another embodiment, a pointing trigger comprises an information representative of a zone of the object to be pointed to activate the pointing trigger. In another embodiment, a pointing trigger comprises an information representative of an angle around a pointing direction to activate the pointing trigger. The embodiments may be combined.

### 4. Brief Description of Drawings

The present disclosure will be better understood, and other specific features and advantages will emerge upon reading the following description, the description making reference to the annexed drawings wherein:
- **Figure 1** illustrates a use case in which interactions between avatars can be described in a scene description file according to the present principles;
- **Figure 2** illustrates a method for processing of triggers related to avatars according to the present principles;
- **Figure 3** shows an example architecture of a device which may be configured to implement method for processing of triggers related to avatars described in a scene description according to embodiments of the present principles;
- **Figure 4** shows an example of an embodiment of the syntax of a stream when the data are transmitted over a packet-based transmission protocol;

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

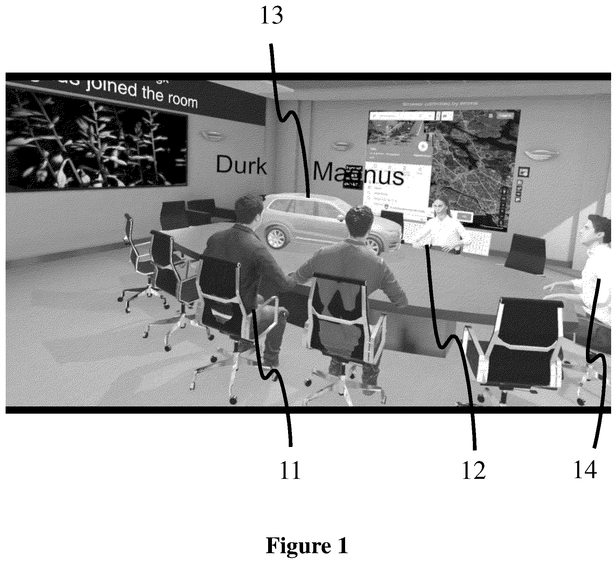

**Figure 1** illustrates a use case in which interactions between avatars can be described in a scene description file according to the present principles. In this example use case, user A is working in an engineering office. She has just completed here latest design and wants to demonstrate it to user B who is working in the factory. She puts on her HMD and haptic gloves and logs into her company's office in the metaverse using her credentials. After authentication, she is now in the virtual office space and she rings user B, whose video appears on a virtual display. User B can see user A's avatar 12 on his phone's display. User A then asks him to join her in the virtual office to show him what she has been working on and get his feedback. User B puts on his HMD and gloves and joins her and is represented by avatar 11. Both user A and user B can now see each other's avatar in the virtual office, where the avatars are seated facing each other across a table. User A loads her design from the virtual panel in front of her and a 3D model 13 of the design appears on the table. User B wants to take a closer look at the model, so he leans towards it and picks it up. He is now able to feel the surface of the model and inspect it from different angles and he identifies an issue with one of the parts. They need a third opinion, and they contact user C from another department, who specializes in this particular function. User C is only able to join the call with her AR glasses and headphones, which are tethered to her phone. User C joins their meeting, and her avatar 14 appears to user A and user B in the virtual office. While she is unable to see the complete virtual office. The avatars of user A and user B, along with the 3D model of user A's design, are overlayed on her glasses display.

Such a virtual conference is managed by an application server (AS), that provides a 3D scene representing the meeting to every connected user. The provided 3D scene depends on the capabilities of each user's equipment (UE). High end VR headset or smartphones can handle an entire virtual room with furniture, shared objects, and avatars. Lightweight AR glasses of the example of Figure 1 are only provided with the shared objects and avatars to be overlaid on the user's reality. For a better experience, the avatars are seamlessly integrated in the meeting room, in terms of visual appearance and interaction. It may be a full body avatar, the upper half part of the body for avatar seated around a table, or a simplified avatar with only a head and two hands. For the virtual appearance, an avatar may be controlled by its remote user. The user may be equipped with a set of sensors (rgb and/or depth camera, Lidar, IMU...) to detect its position and every movement of his body/face/eyes. These data are sent to the AS that may applies the same movement and position on the avatar, so that the user behaviors are replicated to his avatar. The AS may then send to the connected users the updated shape and position of each avatar. The user may be equipped with a controller (game pad, mouse, keyboard) and each user input on this controller is mapped with an action on the avatar (a step forward/backward/left/right, smiling/angry/sad face, wink, hand or body gesture...). Each user input is sent to the AS that applies the corresponding action/expression/movement on the user's avatar. As above, the AS may then send to the connected users the updated shape and position of each avatar. About interactions, gestures and expressions may be detected on avatar (and present user) to launch actions. For instance, when all the avatars are all looking at a given object (e.g. a TV frame) or pointing at this object by any other means: a finger, an arm, a palm, a pointing device (joystick, mouse, gamepad...), a video media is played on the TV. When all the avatars are all looking at a given object (e.g. a 3D object 13 to analyze), or pointing at this object by any other means, the object is highlighted and/or the mesh of the object switch to a better level of details (LOD). When one of the avatars raises its hand, highlighted object 13 gets closer to this avatar. When smiles are detected on an avatar's faces, an animated virtual object may appear around each smiling face. Each local user/UE may be able to detect face/body expression/movement of the other avatars, for instance, by analyzing the rendered image from the user's point of view. The AS may perform the detection, take the appropriate actions on the scene, and transmit the resulting scene to all the connected users. The precision of the detection may depend on the capabilities of the UE. For instance, the gaze direction may be precisely calculated by tracking the avatar's eyes or it may be estimated from the head orientation or from the body orientation.

According to the present principles, interactions in a virtual scene are described in a scene description file, for example in a glTF scene description file thanks to the interactivity extensions specified in MPEG-SD. A behavior, for example in MPEG-SD, associates a set of triggers with a set of actions that are executed upon activation of the triggers by a UE or an AS. Some parameters of a behavior allow the combination of the triggers through logical operations and the control of the activation of these combined triggers. The following tables provide an overview of the semantics for the parameters of a behavior. "M" stands for mandatory and "O" for optional. A default value is given to the optional parameters. Such a description is, so, made independent from the user equipment or the application server.

| **Name** | **Type** | **Usage** | **Default** | **Description** |
|---|---|---|---|---|
| triggers | array | M | | Indices of the triggers in the triggers array considered for this behavior |
| actions | array | M | | Indices of the actions in the actions array considered for this behavior. |
| triggersCombinati onControl | string | M | | Set of logical operations to apply to the triggers (e.g. "#1&~#2\|(#3&#4)"). |
| | | | | An empty string is understood as a logical OR between all the triggers. |
| triggersActivation Control | enumeration | M | | Indicates when the combination of the triggers shall be activated for launching the actions. |
| actionsControl | enumeration | M | | Defines the way to execute the defined actions: sequentially in the order of the actions array or in parallel. |
| ... | | | | |

Some types of triggers related to collision or proximity between objects, objects visibility or user input are specified, for example in MPEG-SD. According to the present principles, trigger types are specified to handle avatar's interactions.

These triggers are distinguished from the user input triggers that are already specified in MPEG-SD. User input trigger types are related to the users who wear or hold the UE and is detected by the UE (e.g. OpenXR actions). The new avatar interaction triggers address all the users represented in the virtual scene by their avatar. Three trigger types related to the facial expressions, gestures, or gaze of an avatar are provided in the following table.

| **Name** | | **Type** | **Usage** | **Default** | **Description** |
|---|---|---|---|---|---|
| type | | enumeration | M | | A number that defines the type of the trigger. It may be one of the following values: TRIGGER_EXPRESSION(4), or TRIGGER_GESTURE(5) or TRIGGER_LOOKAT(6). |
| if (type == TRIGGER_EXPRESSION ) { | | | | | *The trigger is activated when one or more of the specified expressions are detected on one of more avatar's faces.* |
| | nodes | array | M | | Indices of the nodes in the nodes array that represent avatars to be considered for the tracking of expressions. |
| | condition | enumeration | O | ALL | If ALL, the expressions shall be detected on all the avatars referenced in the nodes array to activate the trigger. |
| | | | | | If ONE, the expressions shall be detected on at least one of the avatars referenced in the nodes array to activate the trigger. |
| | | | | | If ONLY_ONE, the expressions shall be detected on only one of the avatars referenced in the nodes array to activate the trigger. |
| | expressions | Array (enumeration) | M | | List of facial expressions to detect. |
| | duration | Number | O | 2 | Give the require duration (in second) of the event to activate the trigger. |
| | occurrence | Number | O | 1 | Give the number of consecutive occurrences of the event that is needed to activate the trigger. |
| } | | | | | |
| if (type == TRIGGER_GESTURE) { | | | | | *The trigger is activated when one or more of the specified gestures are detected on one or more avatars.* |
| | nodes | array | M | | Indices of the nodes in the nodes array that represent avatars to be considered for the tracking of gestures. |
| | condition | enumeration | O | ALL | If ALL, the gestures shall be detected on all the avatars referenced in the nodes array to activate the trigger. |
| | | | | | If ONE, the gestures shall be detected on at least one of the avatars referenced in the nodes array to activate the trigger. |
| | | | | | If ONLY_ONE, the gestures shall be detected on only one of the avatars referenced in the nodes array to activate the trigger. |
| | gestures | Array (enumeration) | M | | List of gestures to detect. |
| | duration | Number | O | 2 | Give the require duration (in second) of the event to activate the trigger. |
| } | | | | | |
| if (type == TRIGGER_LOOKAT) { | | | | | *The trigger is activated when one or more avatar nodes are looking to a given object.* |
| | nodes | array | M | | Indices of the nodes in the nodes array that represent avatars to be considered to activate the trigger |
| | lookAtNode | Number | M | | Index of the node, in the nodes array, to consider. It may be an avatar, a part of an avatar or any other virtual object. |
| | condition | enumeration | O | ALL | If AND, all avatars must look at the "lookatNode" to activate the trigger. |
| | | | | | If ONE, at least one avatar looking at the node activate the trigger. |
| | | | | | If ONLY_ONE, only one avatar shall look at the node to activate the trigger. |
| | duration | Number | O | 2 | Give the require duration (in second) of the event to activate the trigger. |
| | lookAtZone | String | O | "" | Indicate a zone of the lookAtNode to consider. For instance, the centroid of this zone may be targeted. Alternatively, it may be any part of this zone. |
| | | | | | For an avatar node, it may be an avatar path as defined in the section 8.3.4 of MPEG-SD. For instance, the face of an avatar may be targeted with the path "full_body/upper_body/head/face". |
| | | | | | By default (empty string), the lookAtZone may be understood as the centroid of the lookAtNode. Alternatively, an empty string may be understood as any part of the lookAtNode. |
| | lookAtAngle | Number | O | 1 | An angle around the gaze direction that give a tolerance to activate the trigger. |
| } | | | | | |
| ... | | | | | |

In an embodiment, the duration and occurrence parameters are defined as parameters in the behaviour semantics. This embodiment allows to apply these parameters to the combination of triggers instead of to each trigger of the triggers array.

In an embodiment, the "nodes" parameter of the above triggers is optional. The absence of the "nodes" parameters indicates that all the avatars present in the scene must be considered and the condition parameter indicates the condition to activate the trigger (ALL, ONE or ONLY_ONE).

In an embodiment, the TRIGGER_LOOKAT trigger is generalized by a trigger that is activated when one or more avatars are "pointing" or "showing" a given object. The pointing operation may be related to a gaze direction as for the TRIGGER_LOOKAT trigger or to any other types of pointers: direction of an arm, a finger, a palm, a controller...

The semantic of such a trigger (e.g. a TRIGGER_POINTAT trigger with a value of 8) may be as follow:

| **Name** | | **Type** | **Usage** | **Default** | **Description** |
|---|---|---|---|---|---|
| type | | enumeration | M | | A number that defines the type of the trigger. It may be one of the following values: TRIGGER_POINTAT (8). |
| if (type == TRIGGER_POINTAT) { | | | | | *The trigger is activated when one or more avatar nodes are pointing to a given object.* |
| | nodes | array | O | | Indices of the nodes in the nodes array that represent avatars to be considered to activate the trigger. |
| | | | | | If absent or empty, all the avatars present in the scene shall be considered. |
| | pointingModes | Array | | | Types of pointers that can be used to activate the trigger, by order of priority. |
| | pointedNode | Number | M | | Index of the node, in the nodes array, to consider. It may be an avatar, a part of an avatar or any other virtual object. |
| | condition | enumeration | O | ALL | If ALL, all avatars must point at the "pointedNode" to activate the trigger. |
| | | | | | If ONE, at least one avatar shall point at the node to activate the trigger. |
| | | | | | If ONLY_ONE, only one avatar shall point at the node to activate the trigger. |
| | duration | Number | O | 2 | Gives the require duration (in second) of the event to activate the trigger. |
| | pointedZone | String | O | ʺʺ | Indicate a zone of the pointedNode to consider. For instance, the centroid of this zone may be targeted. Alternatively, it may be any part of this zone. |
| | | | | | For an avatar node, it may be an avatar path as defined in the section 8.3.4 of MPEG-SD. For instance, the face of an avatar may be targeted with the path "full_body/upper_body/head/face". |
| | | | | | By default (empty string), the focusedNode may be understood as the centroid of the focusedNode. Alternatively, an empty string may be understood as any part of the focusedNode. |
| | pointedAngle | Number | O | 1 | An angle around the pointer direction that give a tolerance to activate the trigger. |
| } | | | | | |
| ... | | | | | |

The following table gives some examples of facial expressions that are commonly used in facial tracking analysis and that can be used for the "EXPRESSION" trigger. Other types of expressions may be taken from the Robert Plutchik's categories, for example.

| **Expression** |
|---|
| AVATAR_EXPRESSION_SMILE = 0 |
| AVATAR_EXPRESSION_SADNESS |
| AVATAR_EXPRESSION_ANGER |
| AVATAR_EXPRESSION_FEAR |
| AVATAR_EXPRESSION_HAPPYNESS |
| AVATAR_EXPRESSION_SURPRISE |
| AVATAR_EXPRESSION_DISGUST |

The following table provides some examples of gesture that can be addressed on an avatar to specify a TRIGGER_GESTURE trigger. This list is not exhaustive and depends on the capabilities of the gesture detector. This table may be updated with many other gestures performed, for example, with one or more fingers, with one or more hands, or with the entire body. For instance, it may include dynamic gestures to detect an avatar that is walking, running or crouching. In a variant, another trigger type (e.g. a different enumeration value, TRIGGER_MOTION equal to 7) may be specified to handle those avatar movements (AVATAR_RUNNING, AVATAR_WALKING, AVATAR_JUMPING, AVATAR_CROUCHING...). In that case, an additional parameter (e.g. motionPhase) specifies the phase of the motion at which the trigger is activated: when the motion is starting, when it is in progress or when it stops.

| **Gesture** | **Description** |
|---|---|
| AVATAR_EYE_WINK =0 | An eye is blinking |
| AVATAR_EYE_CLOSED | An eye is closed |
| AVATAR_EYE_OPEN | An eye is open |
| AVATAR_EYES_UP | The eyes are looking up |
| AVATAR_EYES_DOWN | The eyes are looking down |
| AVATAR_HAND_UP | One hand is up |
| AVATAR_HAND_GRIP | One hand is closed |
| AVATAR_HANDS_UP | Two hands are up |
| AVATAR_FINGER_UP | One finger is pointing up |
| AVATAR_FINGERS_PINCH | The thumb tip and another fingertip are touching. |
| ... | |

In an embodiment, the TRIGGER_GESTURE and TRIGGER_EXPRESSION triggers may be merged in a single TRIGGER_BEHAVIOR trigger with a "behaviours" parameter representing an array of any items from the above expression and gesture tables.

The following table provides some examples of pointer types used in the TRIGGER_POINTAT trigger (element of the "pointerModes" array):

| **Expression** | **Description** |
|---|---|
| GAZE =0 | The gaze direction |
| FINGER | The direction of a finger |
| ARM | The direction of an arm. |
| PALM | The direction of the palm of a hand |
| POINTING_DEVICE | The direction pointed by a device |
| ... | |

Alternatively, a pointer type may be expressed a string representing a path, for instance, as in OpenXR input path, e.g. /*user*/*eyes_ext*/*input*/*gaze_ext*/*pose* for the gaze direction or *luser*/*hand*/*left*/*input*/*palm_ext*/*pose* for the palm of a hand.

The "pointerModes" array gives a list of pointers that can be used for the trigger. Depending on its capabilities, an apparatus may choose the appropriate pointer to implement the trigger. The pointers are listed by order of priority, i.e. the first ones shall be used when possible.For example, to implement an event that is activated when two avatars (UA and UB) are looking at each other, a first "LOOKAT" trigger with UA as unique element of the nodes array and UB as lookatnode is combined with a second "LOOKAT" trigger with UB as unique element of the nodes array and UA as lookatnode.

The same event may also be implemented with a TRIGGER_POINTAT trigger: a first "POINTAT" trigger with UA as unique element of the nodes array and UB as pointedNode is combined with a second "POINTAT" trigger with UB as unique element of the nodes array and UA as pointedNode.

The following example is presented as a glTF description file, but it could use any other format of scene descriptions comprising the parameters defined according to the present principles. In this example, avatar triggers are described: a "TRIGGER EXPRESSION" trigger, to detect three expressions on the avatar described by the node "0", with a duration of three seconds; a "TRIGGER GESTURE" trigger, to detect two gestures on the avatar described by the node "1"; a "TRIGGER_POINTAT" trigger, to detect when at least one avatar points (with its gaze or its arm) at the object described by the node "2" and a "TRIGGER LOOKAT" trigger, to detect when the avatars described by the node "0" and "1" look at the object described by the node "3".

| |
|---|
| ```
      {
         "scene" : 0,
         "scenes" : [
           {
              "name" : "Scene",
              "nodes" : [0,1,2,3],
              "extensions": {
              "MPEG_scene_interactivity": {
                   "triggers": [
                     {
                       "type": 4,
                       "nodes": [0],
                       "expressions": [0, 2, 4],
                       "duration":2
``` |
| ```
                     },
                     {
                       "type": 5,
                       "nodes": [1],
                       "gestures": [3, 5],
                     },
                     {
                       "type": 8,
                       "pointerModes": [GAZE, ARM],
                       "pointedNode" :2,
                        "condition": ONE,
                      },
                     {
                       "type": 6,
                       "nodes":[0, 1],
                       "lookAtNode":3
                      }
                   ],
                   "actions": [
                  ],
                  "behaviors": [
                  ]
              }
           }
           }
         ],
         "nodes" : [
           {
              "mesh" : 0,
              "name" : "Avatar 0",
``` |
| ```
           },
           {
              "mesh" : 1,
              "name" : "Avatar 1",
           },
           {
              "mesh" : 2,
              "name" : "Object 1",
           },
           {
              "mesh" : 3,
              "name" : "Object 2",
           }
         ],
         "extensionsUsed": [
           "MPEG_scene_interactivity",
         ]
      }
``` |

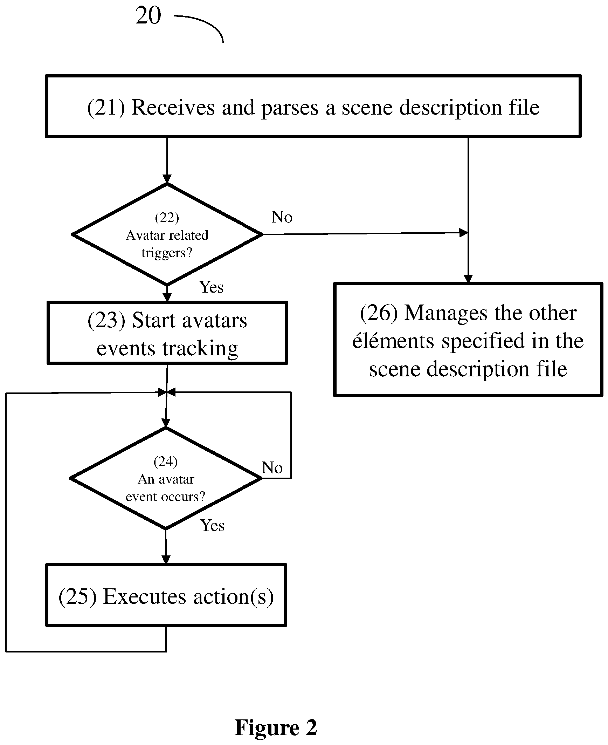

**Figure 2** illustrates a method 20 for processing of triggers related to avatars according to the present principles. At step 21, a scene description file is received. A UE or an AS parses the file and iterates on each described behavior. A step 26 is performed in any case. In step 26, the UE or AS manages the other features described in the scene description file (rendering of 3D objects, animation, lighting, other interactivity items...). At step 22, if triggers that are related to avatars are specified according to the present principles, step 23 is performed otherwise it is skipped and only step 26 is performed. In step 23, the UE/AS starts tracking the avatars and the events (expressions, gestures, gaze and/or pointing) referenced in these triggers. Each time an event occurs and is detected, at step 24, the UE/AS starts the one or more actions specified in the corresponding behavior at step 25.

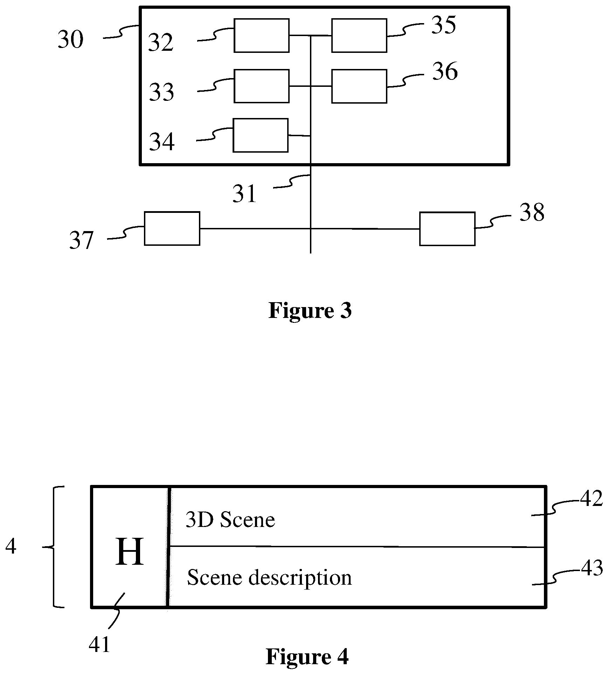

**Figure 3** shows an example architecture of a device 30 which may be configured to implement method 20 for processing of triggers related to avatars described in a scene description according to embodiments of the present principles. The device is linked with other devices via their bus 31 and/or via I/O interface 36.

Device 30 comprises following elements that are linked together by a data and address bus 31:D
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method for processing of triggers related to avatars described in a scene description, and belongs to a set comprising:
- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding a 3D scene comprising animated objects according to the present principle. The structure consists in a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each part of the scene description for example). Syntax element 42 comprises data representative of the 3D scene. It comprises data necessary to render the objects of the 3D scene (e.g. meshes, textures, lighting, etc.). Element of syntax 43 is a part of the payload of the data stream and comprises the scene description. It may comprise data encoding the animations of the objects of the scene. According to the present principles, metadata comprising every information needed for processing of triggers related to avatars are encoded, for example, in element of syntax 43. So, the data needed to manage the interactions between avatars are encoded in the scene description and in in scripts independent from the 3D scene in its globality.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for processing of triggers related to avatar interactions in a 3D scene, the method comprising:
- obtaining a scene description comprising pointing triggers, wherein each pointing trigger comprises a list of types of pointers, a reference to an object of the 3D scene, and a list of actions;
- tracking events (23) in the 3D scene to detect if avatars are pointing the object by using pointers of the list of pointers and, activate the corresponding pointing trigger when an event is detected; and
- applying the list of actions of each activated trigger.

2. The method of claim 1, wherein a pointing trigger comprises a list of second nodes of the scene description representative of a part of the avatars, and wherein the events are tracked for the part of the avatars only.

3. The method of claim 1 or 2, wherein a pointing trigger comprises an information representative of a zone of the object to be pointed to activate the pointing trigger.

4. The method of one of claims 1 to 3, wherein a pointing trigger comprises an information representative of an angle around a pointing direction to activate the pointing trigger.

5. The method of claim 2, wherein a pointing trigger comprises a list of conditions indicating whether all, at least one or only one avatar has to point the object to activate the pointing trigger.

6. The method of one of claims 1 to 5, wherein two triggers are combined through a logical operation to control of the activation of the two triggers.

7. A device (30) for processing of triggers related to avatar interactions in a 3D scene, the device comprising a processor configured for:
- obtaining a scene description comprising pointing triggers, wherein each pointing trigger comprises a list of types of pointers, a reference to an object of the 3D scene, and a list of actions;
- tracking events (23) in the 3D scene to detect if avatars are pointing the object by using pointers of the list of pointers and, activate the corresponding pointing trigger when an event is detected; and
- applying the list of actions of each activated trigger.

8. The device of claim 7, wherein a pointing trigger comprises a list of second nodes of the scene description representative of a part of the avatars, and wherein the events are tracked for the part of the avatars only.

9. The device of claim 7 or 8, wherein a pointing trigger comprises an information representative of a zone of the object to be pointed to activate the pointing trigger.

10. The device of one of claims 7 to 9, wherein a pointing trigger comprises an information representative of an angle around a pointing direction to activate the pointing trigger.

11. The device of claim 8, wherein a pointing trigger comprises a list of conditions indicating whether all, at least one or only one avatar has to point the object to activate the pointing trigger.

12. The device of one of claims 7 to 11, wherein two triggers are combined through a logical operation to control of the activation of the two triggers.

13. A data stream carrying data representative of triggers related to avatar interactions in a 3D scene, wherein the data stream comprises a scene description comprising pointing triggers, wherein each pointing trigger comprises a list of types of pointers, a reference to an object of the 3D scene, and a list of actions.

14. The data stream of claim 13, wherein a pointing trigger comprises a list of second nodes of the scene description representative of a part of the avatars.

15. The data stream of claim 13 or 14, wherein a pointing trigger comprises an information representative of a zone of the object to be pointed to activate the pointing trigger.
